(19) **Europäisches Patentamt European Patent Office Office européen des brevets**

(11) **EP 4 515 607 B1**

(12) **EUROPEAN PATENT SPECIFICATION**

(45) Date of publication and mention of the grant of the patent:
**03.09.2025 Bulletin 2025/36**

(21) Application number: **23744772.7**

(22) Date of filing: **20.07.2023**

(51) International Patent Classification (IPC):
*C25D 3/04* (2006.01)      *C25D 3/22* (2006.01)
*C25D 5/12* (2006.01)      *C25D 5/14* (2006.01)
*H01M 4/04* (2006.01)      *C25D 1/04* (2006.01)
*C25D 3/38* (2006.01)      *C25D 5/00* (2006.01)
*C25D 7/06* (2006.01)      *H01M 4/66* (2006.01)

(52) Cooperative Patent Classification (CPC):
**H01M 4/661; C25D 1/04; C25D 5/12; C25D 5/14; C25D 5/605; C25D 7/0614; H01M 4/0452; H01M 4/0469;** C25D 3/04; C25D 3/22; C25D 3/38; Y02E 60/10

(86) International application number:
**PCT/EP2023/070163**

(87) International publication number:
**WO 2024/018005 (25.01.2024 Gazette 2024/04)**

(54) **COPPER FOIL, SECONDARY BATTERY COMPRISING THE SAME AND PRODUCTION METHOD THEREOF**

KUPFERFOLIE, SEKUNDÄRBATTERIE MIT DIESER FOLIE UND HERSTELLUNGSVERFAHREN DERSELBEN

FEUILLE DE CUIVRE, BATTERIE SECONDAIRE LA COMPRENANT ET SA MÉTHODE DE FABRICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.07.2022 LU 502546**

(43) Date of publication of application:
**05.03.2025 Bulletin 2025/10**

(73) Proprietor: **Circuit Foil Luxembourg**
**9559 Wiltz (LU)**

(72) Inventors:
• **DEVAHIF, Thomas**
**6600 Bastogne (BE)**
• **SCHOLZEN, Sascha**
**4950 Waimes (BE)**
• **ROZEIN, Pierre**
**6690 Vielsalm (BE)**
• **MOUZON, Julie**
**6700 Arlon (BE)**

(74) Representative: **Office Freylinger**
**P.O. Box 48**
**8001 Strassen (LU)**

(56) References cited:
EP-A1- 2 544 282      EP-A1- 2 587 574
EP-A1- 2 654 111      WO-A1-2010/128681
WO-A1-2013/080988      KR-A- 20180 086 949

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention generally relates to the field of copper foils and more specifically to the current collectors, electrodes and silicon secondary batteries comprising a copper foil.

BACKGROUND OF THE INVENTION

Energy storage devices, including batteries and capacitors, are used in various applications. Owing to their relatively high energy densities, relatively high specific energy, light weight, and potential long lifetimes, advanced rechargeable batteries are desirable for a wide range of consumer electronics, electric vehicles, grid storage and other important (future) applications. However, despite the increasing commercial prevalence of lithium (Li)-ion batteries, further development of these batteries is needed, particularly for potential applications in low or zero emission, hybrid-electrical or fully electrical vehicles, drones, consumer electronics, energy efficient cargo ships and locomotives, aerospace applications, and power grids.

Currently, graphite is commonly used commercially as a material for anodes in rechargeable Li-ion batteries because of the reversible intercalation of Li-ions without significant volume (about 10%) and morphology change. The relatively low specific capacity of graphite (370 mA h/g) is its main drawback, which limits the specific capacity of Li-ion batteries. Silicon is seen as a promising replacement for carbon-based anodes for various types of rechargeable batteries, due to silicon's high theoretical specific Li- ion storage capacity of about 3 579 mAh/g compared to other materials. In practice, a lower capacity could be achieved. To date, silicon is being commercialized mainly as an enhancement additive for carbon-based anodes, although alternative production methods for silicon-based and carbon-free anodes were developed over the past few years. For example, WO 2021/029769 A1 discloses a battery comprising an anode made of silicon, and a production method of such an anode using chemical vapor deposition.

One barrier to full implementation of silicon-based electrodes is the fact that Li-Si electrodes experience a high degree of pulverization and exfoliation during lithiation as well as unstable solid electrolyte interface (SEI). The disintegration of active silicon material will lead to shorter lifetime of the battery and can potentially generate safety issues due to shorting in the battery. Another barrier is the great volume change of a silicon-based anode upon charge and discharge, which may be up to 300 %, while carbon-based anode experiences a volume change of only 10 %. Such a volume change can result in delamination of the silicon-based anode from the current collector, hence in a loss of electrochemical contact. When silicon particles are no longer in contact with the current collector, the electrons transfer is no longer possible, and the silicon particles becomes dead mass, thus reducing the overall capacity of the battery.

The current collector often comprises a copper foil. Treatments were proposed to enhance adhesion of the copper foil to the silicon anode, such as coating the copper foil with a layer comprising zinc and/or tin oxides, as proposed in WO 2021/029769 A1. While such known treatments are a satisfying first step in the right direction, allowing for the battery to maintain its capacity over 20 charge-discharge cycles, there are not performant enough for a silicon-based anode to achieve what carbon-based anode currently achieve, i.e. maintaining the battery capacity over hundreds of charge-discharge cycles. Accordingly, there is a need for an improved current collector with higher resistance to delamination, allowing for an enhanced number of charge and discharge cycles.

OBJECT OF THE INVENTION

It is an object of the present invention to provide an improved copper foil to be used in a current collector in a secondary battery without the afore mentioned problems.

SUMMARY OF THE INVENTION

In order to achieve the above-mentioned object, the present invention proposes a treated copper foil, for use in a secondary battery, with a first side and a second side opposite to the first side, and comprising a copper foil with two opposite surfaces and a treatment stack arranged on each one of the surfaces of the copper foil. A side of the treated copper foil corresponds to a surface of the copper foil with its respective treatment stack. The treatment stack comprises a structuration layer to control/influence the surface roughness and at least one functional layer to confer one or more tailored functionalities.

According to the invention, the treated copper foil presents, one each one of the first side and the second side, the following surface roughness characteristics:

- a surface roughness Rz (ISO) comprised between 1.0 and 3.0 $\mu$m, preferably between 1.5 and 2.5 $\mu$m; and

- a surface roughness Sk, known as core height, between 1.0 and 3.0 $\mu$m.

In other words, both treated sides of the inventive treated copper foil exhibit a surface roughness meeting the prescribed ranges of the roughness parameters Rz and Sk.

Ideally, the values of Rz and Sk are the same on both sides, or at least as similar as possible. In practice, however, due to manufacturing tolerances, there may be a difference in Rz and/or Sk values from one side to the other. Furthermore, in the case of electrolytic copper foils, the matte (electrolyte) side and the drum side may have a different initial roughness profile, which will influence the roughness of the treated sides.

In practice, the same treatment may be applied to both surfaces of the copper foil. However, the two sides of the treated copper foils may present different surface roughness due to variations of the initial surface roughness of the (untreated) copper foil, while still being within the prescribed ranges. It should be observed that this difference mainly reflects the initial variations irrespectively of the structuration treatment performed to form the structuration layer.

To sum up, the treatment stack is formed on the surfaces of the base copper foil to achieve the prescribed surface roughness characteristics. This can be done using conventional technology and processes, both for the structuration layer and functional layers.

The invention is based on the findings by the inventors that a specific surface roughness profile, or specific surface condition, of a treated copper foil is desirable for a treated copper foil to be used in a secondary battery, in particular as a current collector in a battery, and on the identification of the corresponding surface roughness characteristics.

One of the merits of the present invention is therefore to have identified that a specific surface condition, represented by 2D and 3D surface roughness parameters ranges, and more particularly by the conventional roughness parameter Rz in combination with Sk, are suitable for accurately characterizing the surface roughness of treated copper foils, in particular but not limited to copper foils, for application as current collectors in batteries, in particular rechargeable Li-ion batteries. The finding of the relevant 3D surface roughness characteristics for this application is of particular relevance. Indeed, the 3D surface roughness characteristics, also known in the art as "contactless" because they are determined with a microscope, bring refined information on the surface roughness compared to contact measurements such as Rz.

In other words, one of the merits of the invention is to have identified that a specific surface roughness characterized by the herein prescribed values of surface roughness Rz and Sk is suitable for a treated copper foil to be used in an electrode assembly, in particular as anodic current collector in an anode assembly.

It will be appreciated that the inventors have surprisingly found that the inventive copper foils used as electrode results into an improved behavior in charge/discharge cycles. Indeed, the inventors have found that with such surface roughness profile, it is possible to ensure a good adherence of the treated copper foil to electrode material attached thereto or coated thereon, such as but without being limited to, a Si-based electrode material.

More specifically, the inventors found that having a Rz in the prescribed range of 1.0 to 3.0 $\mu$m is necessary but not sufficient to ensure a satisfying behaviour in charge/discharge cycles, and only copper foils presenting surface roughness as of Rz and Sk both in the prescribed ranges of 1.0 $\mu$m to 3.0 $\mu$m allow to achieve the desired improved behaviour when used in an electrode assembly.

According to the invention, both the first side and the second side of the treated copper foil present a Rz between 1.0 and 3.0 $\mu$m and a Sk between 1.0 and 3.0 $\mu$m as in use, an electrode material such as a silicon layer will be formed on each one of the two sides of the copper foil.

First test results with a Si-based anode including the present copper foil have shown that the inventive treated copper foil brings higher resistance to delamination and allows for an enhanced number of charge and discharge cycles.

The prescribed roughness profile of the treated copper foil is mainly influenced by the structuration layer that will greatly control the overall roughness.

Whereas Rz has always been a primary parameter to characterize the roughness of copper foils in the industry, the inventors have found that it can be advantageously complemented by other surface roughness parameters such as Sk, and could hence characterize in a suitable and reproducible manner the surface of the inventive treated copper foil, where the prescribed values of Rz and Sk provide enhanced charge/discharge behaviour not heretofore achieved with conventional copper foils for electrodes.

The inventors have identified that the suitable values of Sk for the treated copper foil lie between 1 and 3 $\mu$m. Lower Sk may results in treated copper foils too smooth to properly adhere to another layer of material, while higher Sk, corresponding to highly rough foils, may prevent the formation of a continuous and/or homogenous layer thereon.

The surface roughness Sk - or simply Sk - also referred to as the core roughness depth or core height, is a measure of the core roughness (peak-to-valley) of the surface with the extreme peaks and valleys removed (maximum height peaks and minimum height valleys), and is derived from the areal material ratio curve.

As Sk is affected by both the texture (number and size of peaks and valleys) and the spatial disposition and spacing of the peaks and valleys, this parameter may advantageously further differentiate surfaces of similar roughness as expressed using 2D parameters, such as Rz. Typically, Sk will increase with the spatial intricacy of the texture, whether or not Rz changes.

In embodiments, treated copper foils have an area weight between 50 and 190 g/m$^2$. It is desirable that the treated copper foils are as homogenous as possible, with small to no thickness variations. In this context, referring to an area weight to characterize a copper foil is similar to referring to a thickness of the foil, as the foil have a substantially constant thickness. Treated copper foils with the highest area weight are the thickest and treated copper foils with the lowest area weight are the thinnest.

Such treated copper foils are thin enough to be cost-effective to produce and present desired electrically conductive properties for use in rechargeable or second batteries. In such applications, the thinner the copper foil, the higher the gravimetric energy density.

Preferably, the present treated copper foil has a tensile strength between 30 and 100 kgf/m$^2$. Such treated copper foils can advantageously resist elongation caused by a surface increase of a layer attached thereto or coated thereon, such as e.g. a silicon layer which expands or contracts by the insertion or desorption of Li ions during charge and discharge of a battery comprising such a treated copper foil as current collector and a silicon layer as anode.

Preferably, the treated copper foil has an elongation between 3 and 30%. The treated copper foil may thus advantageously elongate enough to adapt to a surface increase of a layer attached thereto or coated thereon (such as e.g. an electrode layer), while being insufficiently stretchable to form buckles when the layer attached thereto or coated thereon is submitted to a surface decrease, thereby preventing the formation of areas on the copper foil unattached to or uncoated with the (e.g. electrode) layer.

In embodiments, the copper foil is an electrolytic copper foil, i.e. the copper foil is produced by electrodeposition / electroplating of copper. As known in the art, the surface roughness of the untreated copper foil influences the surface roughness of the treated copper foil. Preferably, the base copper foil (in particular electrolytic copper foil) has, for both surfaces, a surface roughness Rz (ISO) between 1.0 and 2.5 $\mu$m, preferably 1.3 and 2.4 $\mu$m, more preferably 1.5 to 2.2 $\mu$m.

In embodiments, the structuration layer is formed by electrodepositing, directly on an untreated side of the copper foil, a structured copper layer with predetermined roughness. The structuration layer is generally formed by adjacent deposits of copper masses/shapes that will provide a controlled alternance of peaks and valley over the surface.

In particular, the structuration layer may comprise or consist of copper nodules deposited directly on a (untreated) side of the copper foil, preferably conventionally covered with a copper plating layer for fixing/encapsulating the nodules on the surface of the copper foil. In other words, the structuration layer may be directly on a side of the untreated copper foil and may comprise copper nodules, and preferably a continuous copper layer above the copper nodules. The deposition of copper nodules is well known in the art. The copper nodules may generally have spherical and/or elliptical shapes.

Preferably the copper nodules are ellipsoidal in shape (main extension substantially perpendicular to the surface of the copper foil) and have a height of between 1.2 and 3.0 $\mu$m, preferably between 1.8 and 2.4 $\mu$m, and a diameter between 0.6 and 1.1 $\mu$m, preferably between 0.7 and 0.9 $\mu$m. One advantage of depositing ellipsoidal copper nodules may be an increased developed surface and hence an increased surface roughness as of Sk with respect to a same foil having spherical copper nodules. Indeed, since ellipsoidal nodules are higher than spherical nodules of similar diameter, higher peaks and valleys are formed per unit of surface, resulting in a greater interface.

In embodiments, the treatment stack comprises at least one functional layer selected from:

- a heat-resistant layer comprising mainly zinc and/or nickel,

- an anti-corrosion layer comprising mainly chromium, and

- an adhesion promoting layer comprising a silane compound, e.g. amino silane.

The term mainly here is to be understood as comprising more than 50 wt.% of the compound, preferably more than 60, 70 or 80 wt.%.

In embodiments, the heat-resistant layer may comprise zinc and/or nickel, in a total amount of up to 60 mg/m$^2$; where the concentration of nickel, respectively zinc is between 0 and 30 mg/m$^2$. A minimum amount of nickel and/or zinc for this layer is however 3 mg/m$^2$. In some embodiments, the heat resistant layer comprises zinc and/or nickel in a total amount of 22 to 32 mg/m$^2$.

In embodiments, the anti-corrosion layer comprises chromium in an amount of between 2 and 10 mg/m$^2$, preferably between 4 and 8 mg/m$^2$ such as e.g. 6 mg/m$^2$.

In embodiments, the adhesion promoting layer comprises silane in an amount of between 3 and 20 mg/m$^2$, preferably between 5 and 15 mg/m$^2$, such as e.g. 10 mg/m$^2$.

In embodiments, the structuration layer comprises copper in an amount of between 5 and 20 g/m$^2$, preferably between 8 and 12 g/m$^2$.

Preferably the treatment stack comprises all three layers, the heat-resistant layer being the inner layer (on the structuration layer), the anti-corrosion layer in the middle and the adhesion promoting layer as outer layer.

Alternatively, the functional layers may be formed as combinations of zinc, nickel and/or chromium, covered by the adhesion promoting layer.

The functional layers are generally continuous layers and may be formed by any appropriate/know process.

Preferably, the treatment stack, and in particular the structuration layer, presents a thickness defined by the nature and number of treatment layers, regardless of a thickness of the (untreated) copper foil. The thickness of the treatment stack is mainly defined by the thickness of the structuration layer which in embodiments is defined by the dimensions of the copper nodules.

According to another aspect, the present invention relates to the use of the inventive treated copper foil as a current collector for a secondary battery. Advantageously, and as mentioned above, the inventors have discovered that such an inventive treated copper foils exhibit suitable mechanical properties and surface roughness to adhere to an electrode, in particular to be use as a current collector, preferably in a secondary battery.

According to yet another aspect, the present invention also concerns an electrode assembly comprising a current collector comprising a treated copper foil according to the first aspect of the invention and an electrode comprising a silicon layer (more than 50 wt.% Si).

The present copper foil has been particular developed to support a Si-based layer. Depending on the manufacturing method, the amount of silicon in the silicon layer may be at least 90%, typically at least 95% and possibly at least 99%. Such electrode is a silicon-based electrode and not a Si-doped carbon-based electrode. The electrode preferably mainly comprises silicon. However, it is still within the scope of the present disclosure that the electrode may comprise other chemical components, such as e.g. hydrogen (the silicon being an amorphous silicon) or traces of nitrogen, phosphor, bore, aluminium and/or carbon, as doping elements in order to increase the conductivity and/or improve the crystal structure of the silicon. The skilled person will appreciate that the electrode comprising a silicon layer may be formed by any suitable process such as e.g. physical or chemical vapor deposition, sputtering, electron beam evaporation or application and calcination of a slurry comprising silicon. These are particularly suitable for high Si content. In preferred embodiments, the silicon layer may be formed by chemical vapor deposition, more preferably by low pressure plasma-enhanced chemical vapor deposition, of silicon. One advantage of such a formation method is that the silicon forming process is a self-organizing and spontaneous process for forming a continuous layer of silicon. According to the same or other embodiments, the silicon layer has a thickness between 5 and 30 $\mu$m.

More conventional methods may however be used to form the silicon layer such as e.g. traditional wet slurry coating, however with a lower Si content (still greater than 50wt.%).

In embodiments, the silicon layer is formed on each one of the first side and the second side of the treated copper foil.

According to yet another aspect, the present invention also concerns a secondary battery comprising an electrolyte, a cathode assembly, an anode assembly, a separator layer, and a lithium salt compound (conventionally with relevant electrolyte additives), wherein the anode assembly either comprises a treated copper foil of the present invention or is an electrode assembly as per the present invention.

According to yet another aspect, the present invention also relates to a method for producing a copper foil as claimed in claim 16.

The resulting treated copper foil comprises a treatment stack on both surfaces, the exposed sides of the treatment stacks presenting each a surface roughness Rz between 1.0 and 3.0 $\mu$m, preferably 1.5 and 2.5 $\mu$m, and a Sk between 1.0 and 3.0 $\mu$m.

Step b) corresponds to a structuration process, or structuration treatment, or roughening treatment, and may also be referred to as the electrodeposition of fine copper particles or of copper nodules. This method is highly effective to obtain a copper foil surface with a desired texture (or 3D configuration or roughness).

Copper concentrations and bath temperature of the structuration process are typically lower than corresponding parameters defined for the electroplating of a copper foil, resulting in the formation of discrete copper particles or nodules instead of a continuous layer. The structuration process of step b) is followed by a subsequent step of conventional copper plating (step c) to form a continuous copper layer above the nodules on each side of the copper foil. The formed copper nodules are thus firmly adhered to the copper foil. Step c) may be directly carried out after step b by passing in a further plating bath comprising copper at a higher concentration.

In step c) and d) continuous layers are formed over the copper foil surfaces and these layers are comparatively thin compared to the structuration layer. Accordingly, these layers tend to follow / reproduce the surface roughness of the structuration layer. In other words, the functional layers are rather thin layers that do not sensibly modify the surface roughness of the treated copper foil, which is mainly determined by the initial roughness of the base copper foil and structuration layer.

The manufacturing of the inventive treated copper foil may generally be carried out using conventional technology. Electrolytic baths/solutions for the structuration (deposition of nodules) and the deposition of the functional layers (passivation / adhesion) are known in the art. They can be used in the context of the invention. The production parameters will be adjusted by the skilled person to provide the desired roughness profile, in particular to control the nodule shapes, more specifically height and diameter.

In particular, those skilled in art of metal electrodeposition are familiar with theories by Winand and Fischer [REF.1], who have described the types of electrodeposits as a function two main parameters: the ratio of the current density to the diffusion-limiting current density (i.e. metal concentration) and the inhibition intensity (e.g. temperature/agitation).

It should however be appreciated that the present invention advantageously provides for the manufacture of ellipsoidal nodules, which is a particularly convenient way of tailoring the surface roughness to achieve the desired roughness profiles, i.e. with the desired Rz and Sk ranges.

A preferred electroplating bath for step b) comprises 15 to 30 g/L of copper, preferably in the form of copper ions $Cu^{2+}$, and 50 to 150 g/L of sulfuric acid. An alternative and equally preferred electroplating bath for step b) comprises 5 to 25 g/L of copper, preferably in the form of copper ions $Cu^{2+}$, and 30 to 90 g/L, preferably between 40 and 80 g/L, of sulfuric acid. The applied current density may lie between 15 and 30 A/dm$^2$, preferably between 20 and 30 A/dm$^2$. The bath is preferably kept at a temperature between 20 and 30°C. The deposition duration (immersion length) may be between 5 and 10 s.

Such electroplating bath allows manufacturing a structuring layer of copper nodules having dimensions appropriate for achieving the desired roughness parameters, in particular the desired Rz and Sk.

A preferred electroplating bath for step c) comprises 60 to 100 g/L of copper, preferably in the form of copper ions $Cu^{2+}$, and 30 to 90 g/L, preferably between 40 and 80 g/L, of sulfuric acid. The applied current density may lie between 15 and 30 A/dm$^2$. The bath is preferably kept at a temperature between 40 and 60°C. The deposition duration (immersion length) may be between 5 and 10 s.

Preferably, the ellipsoidal copper nodules are grown by means of a two-step process, where steps b) and c) are repeated. That is, a first layer of copper nodules is formed, and covered by a continuous copper layer. Then a second layer of copper nodules is formed, followed by deposition of a continuous copper layer. Experience shows that the copper nodules of the second layer tend to form on those of the first layer. Accordingly, ellipsoidal shapes are formed as a result of form combination. These steps are carried out on both sides of the copper foil, preferably in sequence but could be concurrently.

One repetition is considered sufficient to obtain an ellipsoid form (by combination of two superposed nodules); but this should not be construed as limiting - more repetitions may be envisaged.

It may be noted that since the base copper foil, the nodules and covering/encapsulating copper foils are formed by electrodeposition, they consist of pure copper, i.e. with a copper content of at least 99 wt. %, even of 99.9 wt.%.

Further details and advantages of the present invention will be apparent from the following detailed description of several not limiting embodiments with reference to the attached drawings.

BRIEF DESCRIPTION OF THE DRAWINGS

The present invention will now be described, by way of example, with reference to the accompanying drawings, in which:

Figure 1: is a schematic sectional view of a treated copper foil according to the invention;

Figures 2 to 4: are SEM (Scanning Electron Microscope) views of copper foils according to the invention at different magnification;

Figure 5 to 8: are SEM views of comparative copper foils;

Fig. 9: is a schematic curve representing the areal material ratio curve and determination of parameter Sk;

Fig. 10: is a schematic view of a copper foil with a structuration treatment explaining how the height of the nodules is estimated; and

Fig. 11: is a diagram illustrating the deposition of ellipsoidal copper nodules according to an embodiment.

DETAILED DESCRIPTION OF PREFERRED EMBODIMENTS

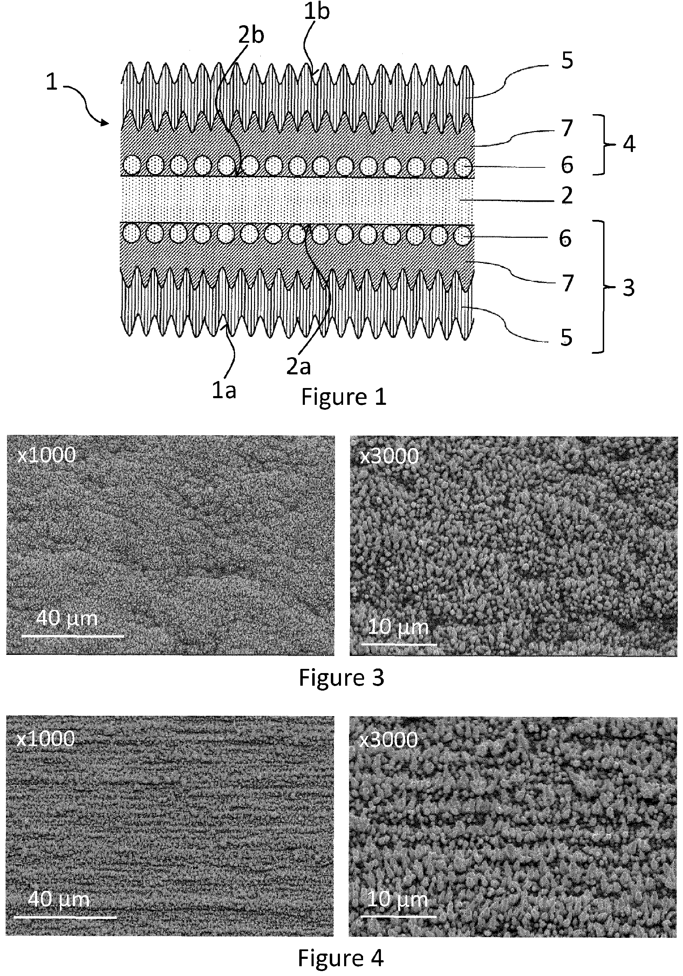

As explained above, the present invention provides a treated copper foil with a specific surface roughness. With reference to Fig. 1, a treated copper foil according to the invention will be described. The treated copper foil 1 has a first side 1a and a second side 1b opposite to the first side, and comprises a copper foil 2 with two opposite surfaces 2a, 2b. The copper foil 2 alone is also referred to as base copper foil, and its two surfaces 2a and 2b may be referred to as untreated surfaces.

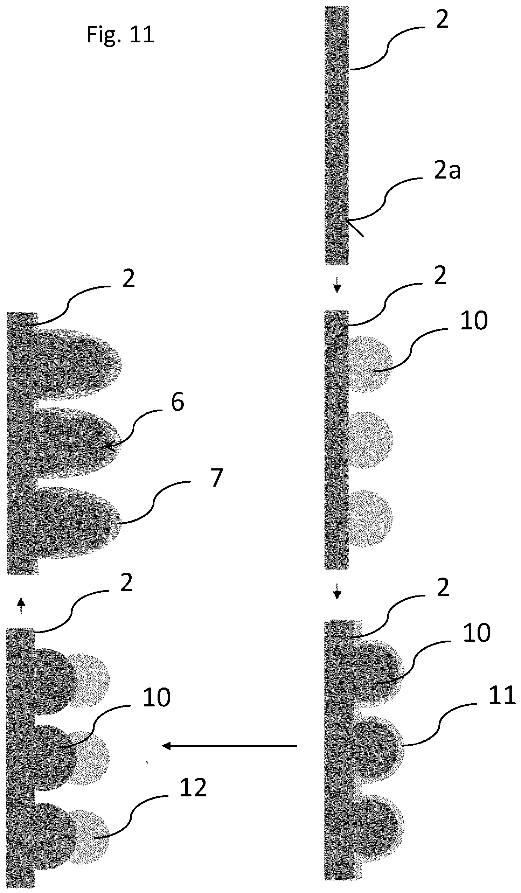

A treatment stack 3 is formed on each one of the two untreated surfaces 2a, 2b. The treatment stack 3 comprises a structuration layer 4 and at least one functional layer 5. In the described embodiment, the structuration layer comprises nodules 6, or fine copper particles, covered by a continuous layer of copper 7. It may be noted that layer 7 is represented in Fig.1 with a substantial height for the sake of explanation; in practice the copper layer 7 may be rather thin and will follow the shapes of the nodules, as illustrated in Fig.11. Roughness characterization of the treated copper foil 1 corresponds to the roughness of the sides 1a, 1b, i.e. to the roughness of the surfaces 2a, 2b of the copper foil 2 modified by the treatment stack 3, in particular by the structuration layer 4.

Such a treated copper foil is produced by submitting an untreated copper foil, produced by rolling (rolled copper foil) or electrodeposition (electrodeposited copper foil), to at least a structuration (i.e. roughening) process. In embodiments, the structuration process consists of growing, i.e. forming, nodules, also referred to as fine copper particles, on the two sides (i.e. surfaces) of the untreated copper foil.

An electrodeposited copper foil, which is preferred as starting/base copper foil, (or electrolytic copper foil) is produced by using an electroforming cell (referred as plating machine in the industry). In the electroforming cell, an electrolyte is passed through an apparatus comprising a drum-shaped cathode (the surface of which is made of stainless steel or titanium) which is rotating and a stationary anode (a lead or a titanium electrode covered by a precious metal oxide) which is provided opposite the cathode. An electric current is passed through both electrodes to deposit copper on the surface of the cathode with a desired thickness, thus forming an electrodeposited copper foil. The electrodeposited copper foil is then peeled off from the surface of the cathode and coiled onto a storage reel. The foil thus prepared is generally referred to as untreated copper foil.

A rolled copper foil can be produced with a predetermined thickness by, for example, performing known processes of hot-rolling, cold-rolling, homogenizing, and degreasing of an ingot obtained by melting and casting of pure copper material.

In a subsequent step, the untreated copper foil is subjected to a surface structuration (i.e. roughening) process/treatment. Preferably, in such process fine copper particles, i.e. copper nodules, are generated (through electrolysis) at the surface 2a, 2b of the copper foil by reduction of copper ions. The size of the nodules generally depends on the duration of the electrolysis.

An exemplary electrolyte for the nodular treatment (referred to as nodular bath) comprises 20 g/L of copper ions $Cu^{2+}$, and 60 g/L of sulfuric acid. The electrolyte may be kept at room temperature (e.g. of about 20°C). The electrolysis may be performed using a current density slightly higher than what is usually used to produce an electrodeposited copper foil, such as e.g. of about 30 A/dm$^2$. Fine copper particles, i.e. copper nodules, are generated at the surface of the copper foil by reduction of copper ions, and grow according to the duration of the electrolysis, such as e.g. 6 seconds.

The formation of the copper nodules on the untreated sides is immediately followed by a subsequent step of conventional copper plating performed using an electrolyte with a higher copper concentration, at a higher temperature and a higher current density, to form a continuous copper layer above the nodules on each side of the copper foil. The formed copper nodules are thus firmly adhered to the copper foil, whereby this step is also referred to as encapsulation.

An exemplary electrolyte for the copper plating treatment (referred to as encapsulating bath) may comprises 60 g/L of copper ions $Cu^{2+}$, and 60 g/L of sulfuric acid. The electrolyte may be kept at 50°C. The electrolysis may be performed using a current density slightly higher than what is usually used to produce an electrodeposited copper foil, such as e.g. of about 15 A/dm$^2$, and the duration of the electrolysis may be e.g. 6 seconds.

It should be noted that those skilled in the art of metal electrodeposition are aware of the conditions required for forming particulate metal deposits. However, the present invention relies on the finding of a particular relationship between surface condition, as described by Rz and Sk, on the battery charge/discharge cycles.

In particular, the inventors have found a particularly advantageous way of structuring a copper layer by means of ellipsoidal copper nodules. In principle, ellipsoidal nodules can be formed as a single metal deposit layer, by selecting appropriate deposition parameters, and adapting the deposition/residence time to grow oblong particles.

Preferably, for the benefit of industrialization, and in particular for the sake of productivity, it is preferred to form the ellipsoidal nodules in a two-step process, i.e. the steps of nodular treatment and copper plating may be repeated on each side, as disclosed in Fig.11. Such process is suitable for forming elliptical copper nodules on a copper foil travelling at conventional speed, i.e. of about 15 to 30 m/min.

As visible from Fig.11, the untreated copper foil 2 is submitted on one of its sides 2a or 2b to a first structuration treatment to deposit a first layer of copper nodules 10 in a nodular bath; followed by the deposition of a thin copper layer 11 in an encapsulating bath. In this first step the nodules 10 are rather round/spherical. The same steps are then carried out using e.g. the same nodular and encapsulating baths: a second layer of copper nodules 12 - also of generally round/spherical shape - is formed, in turn encapsulated by a thin, continuous layer of copper 7. The other side 2b or 2a of the copper foil 2 is then submitted to a similar process.

As can be observed, the nodules of the second layer typically deposit on the nodules of the first layer, the combination forming a globally ellipsoidal shape.

Without willing to be bound by any theory, it is believed that the nodules of the second layer preferentially form on those of the first layer as the current concentrates on peaks and because copper concentration in the nodular bath is not sufficient for copper ions to reach the valleys between already deposited copper nodules.

In a subsequent step, the structured copper foil is submitted to an electrochemical or chemical surface treatment, to form at least one functional layer above the structuration layer comprising the copper nodules. The surface treatment may be e.g. a bond enhancing treatment and/or a passivation treatment.

According to non-limiting embodiments, the at least one functional layer is formed by submitting the structured copper foil to at least one of the following treatment steps:

- Electroplating a layer of zinc. For the sake of exemplification, this may be carried out using a bath comprising 0.80 g/L of zinc and 0.95 g/L of $CrO_3$ at pH=3.8, and using a current density of 4 A/dm$^2$ during a length of time in accordance with the desired amount to deposit.
- Electroplating a layer of nickel. For the sake of exemplification, this may be carried out using a bath comprising 5.0 g/L of nickel and 40.0 g/L of $H_3BO_3$ at pH=3.5 using a current density of 1.5 A/dm$^2$ during a length of time in accordance with the desired amount to deposit.
- Electroplating a layer of chromium. For the sake of exemplification, this may be carried out using a bath comprising 0.95 g/L of $CrO_3$ at pH=2.0 using a current density of 1 A/dm$^2$ during a length of time in accordance with the desired amount to deposit.

Zinc passivation and Nickel passivation are normally considered as alternatives. The zinc passivation layer or the nickel passivation layer is formed first, followed by the chromium layer.

Typically, the zinc and/or plating may be carried out to deposit up to 30 mg/m$^2$ of zinc, respectively nickel. A minimum amount for this passivation layer is 3 mg/m$^2$. The chromium plating may be carried out to deposit 2 to 10 mg/m$^2$ of chrome.

Finally, a silane compound layer may be formed as outer layer, for adhesion promoting purposes. The silane compound layer may be formed by passing through a bath comprising 0.4 g/L of Si (as amino silane). This optional layer may comprise 3 to 20 mg/m$^2$ of silane compound.

Examples

Electrolytic copper foils with an initial surface roughness Rz between 1.0 and 3.0 $\mu$m were produced by a method well known in the art. As produced, untreated copper foils were then either submitted to a structuration process according to the invention (examples 1 to 3) or to no structuration process (comparative examples 1 and 2, not part of the invention).

Copper foils with a structuration layer according to the invention (examples 1 to 3) were then submitted to a functional treatment to successively deposit three functional layers, namely a layer comprising zinc, a layer comprising chromium and a layer comprising a silane compound. Each one of the three functional layers is a continuous layer, and the overall thickness of the functional layers is between 5 and 50 nm.

Structured or unstructured copper foils of comparative examples were either submitted to no nodular treatment and no functional treatment except chromium passivation (comparative examples 1 and 2), to a nodular and functional treatment similar to the one of the copper foils according to the invention (comparative example 3) and to a different nodular treatment with same functional treatment (comparative example 4).

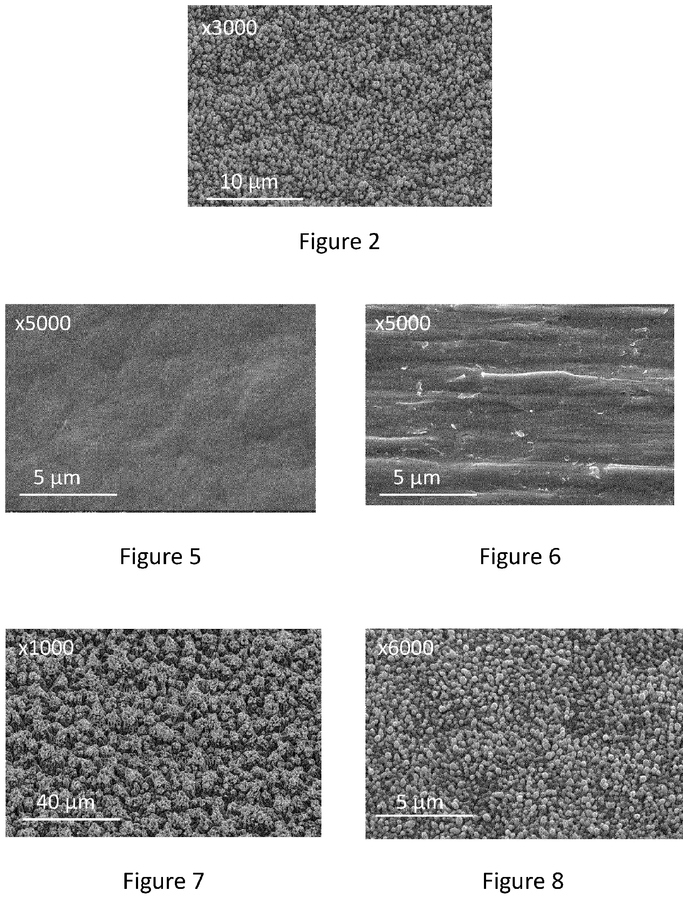

The surface roughness as observed with the SEM microscope is shown in Figs 2 to 8:

- Fig.2 to 4 correspond to examples 1, 2 and 3, respectively;
- Figs 5 to 8 correspond to counter examples 1 to 4, respectively.

The thus obtained copper foils were then analysed to determine their surface characteristics, such as surface roughness (as of Rz and Sk, all according to the ISO standard) and to determine some mechanical characteristics, such as area weight, tensile strength and elongation.

Secondary batteries comprising a silicon anode and a treated copper foil according to example 1-3 or comparative example 1-4 as anodic current collector where then manufactured according to a method known in the art and not further detailed herein.

Copper foils are analysed as follows.

*Determining the surface roughness Rz*

The roughness as of Rz of copper foils is measured with a contact profilometer consisting of a diamond needle (stylus) sliding on the surface. From this measurement a 2D profile of the surface is created, and Rz is calculated as the average distance between the highest peak and lowest valley over 8 sampling lengths. Here the surface roughness Rz refers to ISO 4287:1997.

*Determining the surface roughness Sk*

The Sk parameter (core height) is measured using non-contact three-dimensional white light interferometry. Here the surface roughness Sk refers to ISO 25178-2, dated 2021.

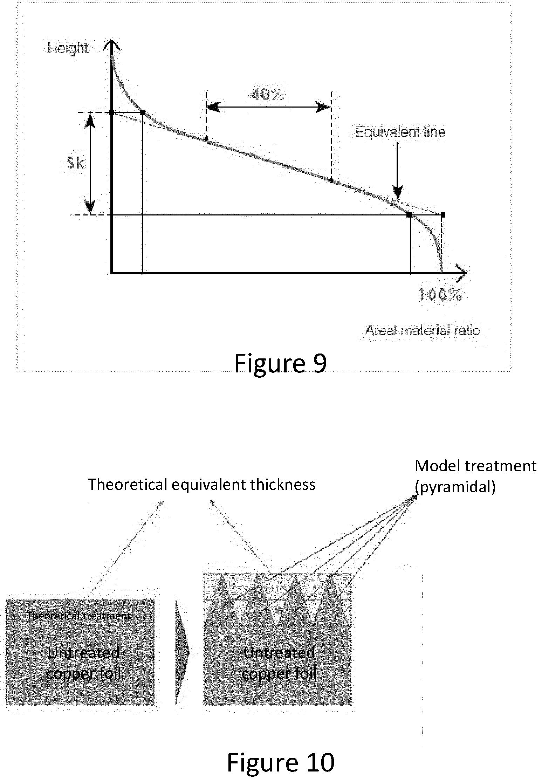

Sk Core height is calculated as the difference of heights at the areal material ratio values 0% and 100% on the equivalent line. Specifically, it is a value obtained by subtracting the minimum height from the maximum height of the core surface. The determination of Sk is illustrated in Fig.9.

An areal material ratio represents the area with a specific height c or higher. The areal material ratio curve of an area is a curve representing heights at which the areal material ratio changes from 0% to 100%. An equivalent line is the line where the sum of the squared deviation in the direction of a vertical axis is the smallest in the centre portion. The centre portion of the areal material ratio curve is defined as the position at which a secant line has the smallest gradient (inflexion point).

The section of the equivalent line between the two height positions where the areal material ratio is 0% and 100% is called the core surface. The peaks with a height above the core surface are called reduced peaks, while the valleys below the core surface are called reduced valleys. Sk is calculated as the difference of heights at the areal material ratio values 0% and 100% on the equivalent line; specifically, it is a value obtained by subtracting the minimum height from the maximum height of the core surface.

The principle of white light interferometry is to divide a light beam in two paths, directing one to a reference mirror and the other one to the sample surface. This measurement beam travel different distances depending on the surface profile. The two waveforms are then recombined and create specific interference patterns depending on their phase difference. Those patterns are analyzed to calculate the height of the sample at each point (pixel) scanned. The areal material ratio curve is then calculated from this 3D profile is typically measured on a 155$\mu$m x116 $\mu$m (i.e. about 18000 $\mu$m$^2$) sample surface.

In the context of the invention, and for the measurement of Sk for the examples and counter examples, a microscope model **VK-X100 by Keyence** has been used.

It may be noted that the areal material ratio curve shows the height as a function of the areal material ratio. Neither the measuring apparatus (interferometer) nor the mathematical calculation method or model used to determine the areal material ratio curve influences the curve. In other words, the same curve is obtained regardless of the measuring apparatus and the mathematical method, the only possible variability being related to the sensibility of the measuring apparatus and therefore to the precision of the obtained values. On the obtained areal material ratio curve, the tangent at the inflexion point is determined. The maximum and minimum height of the core surface are defined as the intersection between the tangent and the height axis at areal material ratio of 0% and 100% respectively. Sk is then calculated by subtracting the minimum height from the maximum height of the core surface.

*Imaging the treated copper foils*

Produced treated copper foils according to the invention and to comparative examples are imaged using a scanning electron microscope (SEM)THERMO FISHER, Prisma E, with a magnification between 1000 and 6000 at a voltage of 20 kV and a tilt of 30°.

*Determining the height and diameter of the nodules*

As can be seen from the SEM images, the nodules tend grow as a particle that may be round (spherical) or, in particular for examples 1-3, more elongate (ellipsoidal) in a direction rather perpendicular to the copper foil surface.

Approaches are proposed to characterize the dimensions of the nodules, namely diameter and height.

Nodules diameter is determined from the SEM images. Diameter of ten nodules are measured, and the arithmetical mean and standard deviation are then calculated from the measurements, and presented in Table 1.

Nodules height is evaluated as follows. Weight area of the structured copper foil is measured and the weight area of the structuration layer is estimated by subtracting the weight area of the untreated copper foil from the weight area of the structured copper foil (or of the treated copper foil since the weight of the functional foils is comparatively negligible). Theoretical thickness of a plain and smooth structuration layer is then determined as follows:

$$Thickness\ of\ structuration\ layer = \frac{Weight\ of\ the\ structuration\ layer}{Area\ of\ the\ copper\ foil\ x\ copper\ density}$$

Height of the nodules is then estimated as being two times the theoretical thickness, with the hypothesis that the nodules form a pyramidal pattern at the surface of the copper foil. This is illustrated in Fig.10.

*Determining mechanical properties*

The tensile strength and elongation are determined according to IPC TM 650 2.4.18.

The tensile strength and the elongation at break were determined by mechanical force testing with a drawing speed of 2.0 inches/min at ambient temperature, using as test samples specimens measuring 6x1/2 inches, cut in the (treated) copper foil.

The elongation is determined as follows:

$$Elongation = \frac{Length\ at\ break - original\ length}{Original\ length} x100$$

The tensile strength is determined as follows:

$$Tensile\ strength = \frac{Load\ used\ to\ break\ sample}{Mean\ average\ cross - sectional\ area}$$

Where the mean average cross-sectional area is determined as follows:

$$Mean\ average\ cross - sectional\ area = \frac{Weight\ of\ sample}{Area\ of\ sample\ x\ density\ of\ copper}$$

The area weight is determined by weighing the specimens and calculating the area weight as follows:

$$Area\ weight = \frac{Weight\ of\ sample}{Area\ of\ sample}$$

Five measurements are performed for each example and comparative examples, and the respective arithmetical means are presented in Table 1 as the elongation, tensile strength and area weight values.

*Determining the number of cycles retaining more than 80 % of the initial capacity*

Batteries comprising a treated copper foil as anodic current collector and a silicon anode were cycled at an irreversible capacity of about 600 mAh per gram of silicon, and retained capacity was measured after each cycle.

The last column of table 1 indicates the number of cycles achieved with the ratio

$$QN\ /\ Q1\ x\ 100 \geq 80\ \%$$

Where Q1 is the initial discharge capacity and QN is the discharge capacity of the Nth cycle.

Such test is conventional in the art.

*Discussion of the examples and counter examples*

Surface characteristics, mechanical characteristics and number of cycles retaining more than 80 % of the initial capacity for treated copper foils according to the invention and to comparative examples are presented in Table 1.

All copper foils have an area weight between 50 and 190 g/m$^2$ and a similar tensile strength (Table 1).

Moreover, all treated copper foil corresponding to the invention (examples 1 to 3) have a Sk between 1.0 and 3.0 μm and a Rz between 1.0 and 3.0 μm, as well as an elongation between 3 and 30 %.

By comparing the results obtained for examples 2 and 3, and those obtained for comparative examples 1 and 2, it should be noted that these four copper foils have very similar area weights and tensile strengths (Table 1), but the batteries comprising treated copper foils according to the invention retain more than 80% of their initial capacity over a much higher number of cycles than the batteries comprising comparative copper foils (Table 1). Examples 2 and 3 were subjected to a structuration process (see Fig. 3 corresponding to example 2 and Fig. 4 corresponding to example 3) unlike the foils of comparative examples 1 and 2 (see Fig. 5 and 6). The presence of nodules (or fine copper particles) at the surface of the copper foils and the resulting higher surface roughness, in particular the higher Sk, allows for a better adhesion of the treated copper foil to the silicon anode and a higher retention of the battery capacity. Having a Rz in the prescribed range of 1.0 to 3.0 $\mu$m is not sufficient to ensure a satisfying number of cycles retaining more than 80% of the initial capacity, as apparent from comparative examples 1 and 2. If the Sk is below 1.0 $\mu$m, a battery comprising such a copper foil loses more than 20% of its initial capacity after less than 10 cycles.

Now referring to comparative examples 3 and 4, nodules formation on the copper foils is not enough to ensure a satisfying retention of a battery capacity upon charge-discharge cycles. If the treated copper foil is too rough (comparative example 3) or too smooth (comparative example 4), the performance is not optimal. The loss of capacity is faster than for batteries comprising treated copper foils according to the invention (see Table 1, comparative examples 3 and 4 and e.g. example 1).

Moreover, comparative examples 1, 2 and 4 present a surface roughness as of Rz very similar to the one of treated copper foils according to the present invention. However, the retention of capacity for comparative example 4 is lower than what could be achieved with copper foils according to the present invention. One explanation would be that comparative foils are in fact not rough enough, and certainly not as rough as the inventive foils, when considering the 3D and contactless parameters such as Sk. Characterizing the roughness of a treated copper foil mainly by 2D and contact parameters such as Rz is not sensitive enough to appreciate the actual roughness of the foil and to explain the achieved performances. As mentioned above, a merit of the invention is thus to have identified a certain surface roughness condition, which can be characterized by its Rz and further with a higher sensitivity by the parameter Sk, which surface roughness condition enhances the performances of copper foils as anodic current collector and the capacity retention of batteries comprising such copper foils.

Only treated copper foils corresponding to the present invention, i.e. foils presenting a Sk between 1 and 3 $\mu$m in addition to a Rz between 1 and 3 $\mu$m allow to achieve the desired retention of a battery capacity upon charge-discharge cycles.

**References**

[REF.1] R. WINAND, 'Electrocristallisation. Théorie et applications', JOURNAL DE PHYSIQUE IV Colloque C1, supplément au Journal de Physique III, Volume 4, janvier 1994, C1-55 to C1-73.

| Sample | Untreated copper foil | | Treated copper foil | | | | | | | | |
|---|---|---|---|---|---|---|---|---|---|---|---|
| | Sk μm | Rz μm | Area weight g/m² | Tensile strength kgf/mm² | Elongation % | Sk μm | Rz μm | Nodules shape | Nodules height μm | Nodules diameter μm | Number of cycles retaining more than 80% of initial capacity |
| Example 1 | 0.2±0.1 | 1.5 | 154 | 30.9 | 11.0 | 1.52 | 1.8 | Ellipsoidal | 2.4 | 0.8±0.2 | > 120 |
| Example 2 | 0.2±0.1 | 2.2 | 82 | 33.1 | 4.1 | 1.14 | 2.4 | Ellipsoidal | 1.8 | 0.7±0.1 | > 120 |
| Example 3 | 0.2±0.1 | 1.8 | 82 | 33.1 | 4.1 | 2.05 | 2.4 | Ellipsoidal | 1.8 | 0.9±0.2 | > 120 |
| Comparative example 1 | 0.44 | 1.6 | 90 | 31.0 | 10.9 | 0.44 | 1.9 | No nodules | No nodules | No nodules | < 10 |
| Comparative example 2 | 0.59 | 1.6 | 90 | 31.0 | 10.9 | 0.59 | 2.0 | No nodules | No nodules | No nodules | < 10 |
| Comparative example 3 | 0.2±0.1 | 5.3 | 152 | 35.2 | 16.5 | 4.56 | 5.8 | Ellipsoidal | 2.4 | 0.9±0.2 | < 90 |
| Comparative example 4 | 0.2±0.1 | 1.1 | 146 | 32.5 | 11.4 | 0.85 | 1.3 | Spherical | 0.6 | 0.4±0.1 | < 90 |

**Claims**

1. A treated copper foil (1) for use in a secondary battery with a first side (1a) and a second side (1b) opposite to the first side, the treated copper foil comprising a copper foil (2) with two opposite surfaces (2a, 2b) and a treatment stack (3) arranged on each one of the surfaces (2a, 2b) of the copper foil (2), a side of the treated copper foil corresponding to a surface of the copper foil with its respective treatment stack;

   wherein the treatment stack comprises a structuration layer (4) and at least one functional layer (5),
   wherein each one of the first side (1a) and the second side (1b) has a Rz according to ISO 4287:1997 between 1.0 and 3.0 $\mu$m, preferably 1.5 and 2.5 $\mu$m, and a Sk according to ISO 25178-2 dated 2021 between 1.0 and 3.0 $\mu$m.

2. The treated copper foil as claimed in claim 1, wherein the copper foil is an electrolytic copper foil and wherein both surfaces thereof present a surface roughness Rz between 1.0 and 2.5 $\mu$m, preferably 1.3 and 2.4 $\mu$m, more preferably 1.5 to 2.2 $\mu$m.

3. The treated copper foil as claimed in any one of the preceding claims, wherein the structuration layer is formed by electrodepositing, directly on the respective surface of the copper foil, a structured copper layer with predetermined roughness.

4. The treated copper foil as claimed in claim 3, wherein the structuration layer includes copper nodules (6) deposited directly on the surface (2a, 2b) of the copper foil, preferably
   wherein the copper nodules are ellipsoidal and have a height of between 1.2 and 3.0 $\mu$m, preferably between 1.8 and 2.4 $\mu$m, and a diameter between 0.6 and 1.1 $\mu$m, preferably between 0.7 and 0.9 $\mu$m.

5. The treated copper foil as claimed in any one of the preceding claims, wherein the treatment stack comprises at least one of a heat-resistant layer comprising zinc or nickel, an anti-corrosion layer comprising chromium and an adhesion promoting layer comprising a silane compound.

6. The treated copper foil as claimed in any one of the preceding claims, wherein the treated copper foil has an area weight of 50 to 190 g/m$^2$; and/or

   wherein the treated copper foil has a tensile strength between 30 and 100 kgf/mm$^2$ at 20°C, and/or
   wherein the treated copper foil has an elongation between 3 and 30%.

7. Use of a treated copper foil as claimed in any one of the preceding claims as a current collector for a secondary battery.

8. An electrode assembly comprising a current collector comprising a treated copper foil as claimed in any one of claims 1 to 6 supporting an electrode comprising a silicon layer, wherein the amount of silicon in the silicon layer is greater than 50%, preferably at least 90%, more preferably above 95% or 99%.

9. The electrode assembly as claimed in the preceding claim wherein the silicon layer is formed by chemical vapor deposition, preferably by low pressure plasma-enhanced chemical vapor deposition, of silicon, and preferably wherein the silicon layer has a thickness between 5 and 30 $\mu$m.

10. The electrode assembly as claimed in any one of claims 8 to 9, wherein a silicon layer is formed on each side of the treated copper foil.

11. A secondary battery comprising an electrolyte, a cathode assembly, an anode assembly, a separator layer, and a lithium salt compound, wherein the anode assembly comprises a treated copper foil as claimed in any one of claims 1 to 6 or wherein the anode assembly is an electrode assembly as claimed in any one of claims 8 to 10.

12. A method for producing a treated copper foil as claimed in any one of claims 1 to 6, comprising the steps of:

   a) providing an untreated copper foil (2) with a first surface (2a) and a second surface (2b) opposite to the first surface, preferably an electrolytic copper foil having a surface roughness Rz between 1.0 and 2.5 $\mu$m on both surfaces;
   b) performing a structuration treatment (3) on each surface of the copper foil by immersing the copper foil in an electroplating bath to provide a predetermined surface roughness on both sides,

c) electroplating an additional continuous layer (7) of copper above the layers comprising the nodules; and

d) forming at least one functional layer (5) on the additional continuous layers of copper.

13. The method of claim 12, wherein step b) comprises passing the copper foil through an electroplating bath comprising 5 to 25 g/L of copper, preferably in the form of copper ions $Cu^{2+}$, and 30 to 90 g/L, preferably between 40 and 80 g/L, of sulfuric acid, and wherein a current density of 15 to 30 A/dm$^2$, preferably of 20 to 30 A/dm$^2$, is applied, wherein the immersion duration is between 5 and 10 s, and/or

wherein the bath is maintained at a temperature between 20 and 30°C.

14. The method of claim 13, wherein steps b) and c) are repeated on each surface to produce copper nodules of ellipsoidal shape and having a height of between 1.2 and 3.0 $\mu$m, preferably between 1.8 and 2.4 $\mu$m, and a diameter between 0.6 and 1.1 $\mu$m, preferably between 0.7 and 0.9 $\mu$m.

15. The method of claim any one of claims 12 to 14, wherein step c) comprises passing the copper foil through an electroplating bath comprising 60 to 100 g/L of copper, preferably in the form of copper ions $Cu^{2+}$, and 30 to 90 g/L, preferably between 40 and 80 g/L, of sulfuric acid, and wherein a current density of 15 to 30 A/dm$^2$, preferably of 15 to 25 A/dm$^2$, is applied, wherein the immersion duration is between 5 and 10 s.

**Patentansprüche**

1. Behandelte Kupferfolie (1) zur Verwendung in einer Sekundärbatterie mit einer ersten Seite (1a) und einer zweiten Seite (1b), die zur ersten Seite entgegengesetzt ist,

wobei die behandelte Kupferfolie eine Kupferfolie (2) mit zwei entgegengesetzten Oberflächen (2a, 2b) und Behandlungsstapel (3) umfasst, wobei ein Behandlungsstapel auf jeder der Oberflächen (2a, 2b) der Kupferfolie (2) angeordnet ist, wobei eine Seite der behandelten Kupferfolie einer Oberfläche der Kupferfolie mit ihrem jeweiligen Behandlungsstapel entspricht;

wobei der Behandlungsstapel eine Strukturierungsschicht (4) und mindestens eine funktionelle Schicht (5) umfasst,

wobei jede von der ersten Seite (1a) und der zweiten Seite (1b) eine Rz gemäß ISO 4287:1997 zwischen 1,0 und 3,0 $\mu$m, vorzugsweise 1,5 und 2,5 $\mu$m, und eine Sk gemäß ISO 25178-2 von 2021 zwischen 1,0 und 3,0 $\mu$ aufweist.

2. Behandelte Kupferfolie nach Anspruch 1, wobei die Kupferfolie eine elektrolytische Kupferfolie ist und wobei beide Oberflächen von dieser eine Oberflächenrauheit Rz zwischen 1,0 und 2,5 $\mu$m, vorzugsweise 1,3 und 2,4 $\mu$m, stärker bevorzugt 1,5 bis 2,2 $\mu$m, aufweisen.

3. Behandelte Kupferfolie nach einem der vorhergehenden Ansprüche, wobei die Strukturierungsschicht durch galvanischen Überzug direkt auf die jeweilige Oberfläche der Kupferfolie gebildet wird, eine strukturierte Kupferschicht mit einer vorbestimmten Rauheit.

4. Behandelte Kupferfolie nach Anspruch 3, wobei die Strukturierungsschicht Kupferknollen (6) einschließt, die direkt auf der Oberfläche (2a, 2b) der Kupferfolie aufgebracht sind, vorzugsweise

wobei die Kupferknollen ellipsoidisch sind und eine Höhe von zwischen 1,2 und 3,0 $\mu$m, vorzugsweise zwischen 1,8 und 2,4 $\mu$m, und einen Durchmesser zwischen 0,6 und 1,1 $\mu$m, vorzugsweise zwischen 0,7 und 0,9 $\mu$m, aufweisen.

5. Behandelte Kupferfolie nach einem der vorhergehenden Ansprüche, wobei der Behandlungsstapel mindestens eine von einer wärmebeständigen Schicht, die Zink oder Nickel umfasst, einer korrosionsbeständigen Schicht, die Chrom umfasst, und einer haftungsfördernden Schicht, die eine Silanverbindung umfasst, umfasst.

6. Behandelte Kupferfolie nach einem der vorhergehenden Ansprüche, wobei die behandelte Kupferfolie ein Flächengewicht von 50 bis 190 g/m$^2$ aufweist; und/oder wobei die behandelte Kupferfolie eine Zugfestigkeit zwischen 30 und 100 kgf/mm$^2$ bei 20 °C aufweist, und/oder wobei die behandelte Kupferfolie eine Längung zwischen 3 und 30 % aufweist.

7. Verwendung einer behandelten Kupferfolie nach einem der vorhergehenden Ansprüche als Stromabnehmer für eine Sekundärbatterie.

8. Elektrodenaufbau, umfassend einen Stromabnehmer, umfassend eine behandelte Kupferfolie nach einem der Ansprüche 1 bis 6, die eine Elektrode trägt, die eine Siliciumschicht umfasst, wobei die Menge an Silicium in der Siliciumschicht größer als 50 %, vorzugsweise mindestens 90 %, stärker bevorzugt mehr als 95 % oder 99 % beträgt.

9. Elektrodenaufbau nach dem vorhergehenden Anspruch, wobei die Siliciumschicht durch chemisches Aufdampfen, vorzugsweise durch chemisches Niederdruck-Aufdampfen mit Plasmaunterstützung, von Silicium gebildet wird, und vorzugsweise wobei die Siliciumschicht eine Dicke zwischen 5 und 30 $\mu$m aufweist.

10. Elektrodenaufbau nach einem der Ansprüche 8 bis 9, wobei eine Siliciumschicht auf jeder Seite der behandelten Kupferfolie gebildet ist.

11. Sekundärbatterie, umfassend einen Elektrolyt, einen Kathodenaufbau, einen Anodenaufbau, eine Trennschicht und eine Lithiumsalzverbindung, wobei der Anodenaufbau eine behandelte Kupferfolie nach einem der Ansprüche 1 bis 6 umfasst oder wobei der Anodenaufbau ein Elektrodenaufbau nach einem der Ansprüche 8 bis 10 ist.

12. Verfahren zum Herstellen einer Kupferfolie nach einem der Ansprüche 1 bis 6, umfassend die Schritte:

   a) Bereitstellen einer unbehandelten Kupferfolie (2) mit einer ersten Oberfläche (2a) und einer zweiten Oberfläche (2b), die zur ersten Oberfläche entgegengesetzt ist, vorzugsweise einer elektrolytischen Kupferfolie mit einer Oberflächenrauheit Rz zwischen 1,0 und 2,5 $\mu$m auf beiden Oberflächen;
   b) Durchführen einer Strukturierungsbehandlung (3) auf jeder Oberfläche der Kupferfolie durch Eintauchen der Kupferfolie in ein galvanisches Bad, um eine vorbestimmte Oberflächenrauheit auf beiden Seiten bereitzustellen,
   c) galvanisches Beschichten einer zusätzlichen durchgehenden Schicht (7) aus Kupfer über den Schichten, die die Knollen umfassen; und
   d) Bilden mindestens einer funktionellen Schicht (5) auf den zusätzlichen durchgehenden Schichten von Kupfer.

13. Verfahren nach Anspruch 12, wobei Schritt b) das Hindurchführen der Kupferfolie durch ein galvanisches Bad, das 5 bis 25 g/l Kupfer, vorzugsweise in Form von Kupferionen Cu$^{2+}$, und 30 bis 90 g/l, vorzugsweise zwischen 40 und 80 g/l, Schwefelsäure umfasst, und wobei eine Stromdichte von 15 bis 30 A/dm$^2$, vorzugsweise von 20 bis 30 A/dm$^2$ aufgebracht wird, wobei die Eintauchdauer zwischen 5 und 10 s liegt, und/oder wobei das Bad auf einer Temperatur zwischen 20 und 30 °C gehalten wird.

14. Verfahren nach Anspruch 13, wobei die Schritte b) und c) auf jeder Oberfläche wiederholt werden, um Kupferknollen von einer ellipsoidischen Form zu erzeugen, die eine Höhe zwischen 1,2 und 3,0 $\mu$m, vorzugsweise zwischen 1,8 und 2,4 $\mu$m, und einen Durchmesser zwischen 0,6 und 1,1 $\mu$m, vorzugsweise zwischen 0,7 und 0,9 $\mu$m, aufweisen.

15. Verfahren nach einem der Ansprüche 12 bis 14, wobei Schritt c) das Hindurchführen der Kupferfolie durch ein galvanisches Bad, das 60 bis 100 g/l Kupfer, vorzugsweise in Form von Kupferionen Cu$^{2+}$, und 30 bis 90 g/l, vorzugsweise zwischen 40 und 80 g/l, Schwefelsäure, umfasst, und wobei eine Stromdichte von 15 bis 30 A/dm$^2$, vorzugsweise von 15 bis 25 A/dm$^2$, aufgebracht wird, wobei die Eintauchdauer zwischen 5 und 10 s liegt.

**Revendications**

1. Feuille de cuivre (1) traitée pour une utilisation dans une batterie secondaire avec un premier côté (1a) et un deuxième côté (1b) opposé au premier côté, la feuille de cuivre traitée comprenant une feuille de cuivre (2) avec deux surfaces opposées (2a, 2b) et une pile de traitement (3) agencée sur chacune des surfaces (2a, 2b) de la feuille de cuivre (2), un côté de la feuille de cuivre traitée correspondant à une surface de la feuille de cuivre avec sa pile de traitement respective ;

   dans laquelle la pile de traitement comprend une couche de structuration (4) et au moins une couche fonctionnelle (5),
   dans laquelle chacun du premier côté (1a) et du deuxième côté (1b) a une Rz correspondant au ISO 4287 :1997 comprise entre 1,0 et 3,0 $\mu$m, de préférence entre 1,5 et 2,5 $\mu$m, et une Sk correspondant au ISO 25178-2 de 2021 comprise entre 1,0 et 3,0 $\mu$m.

2. Feuille de cuivre traitée telle que revendiquée dans la revendication 1, dans laquelle la feuille de cuivre est une feuille de cuivre électrolytique et dans laquelle ses deux surfaces présentent une rugosité de surface Rz comprise entre 1,0

et 2,5 $\mu$m, de préférence entre 1,3 et 2,4 $\mu$m, plus préférablement entre 1,5 et 2,2 $\mu$m.

3. Feuille de cuivre traitée telle que revendiquée dans l'une quelconque des revendications précédentes, dans laquelle la couche de structuration est formée par électrodéposition, directement sur la surface respective de la feuille de cuivre, d'une couche de cuivre structurée ayant une rugosité prédéterminée.

4. Feuille de cuivre traitée telle que revendiquée dans la revendication 3, dans laquelle la couche de structuration comprend des nodules (6) de cuivre déposés directement sur la surface (2a, 2b) de la feuille de cuivre, de préférence, dans laquelle les nodules de cuivre sont ellipsoïdaux et ont une hauteur comprise entre 1,2 et 3,0 $\mu$m, de préférence entre 1,8 et 2,4 $\mu$m, et un diamètre compris entre 0,6 et 1,1 $\mu$m, de préférence entre 0,7 et 0,9 $\mu$m.

5. Feuille de cuivre traitée telle que revendiquée dans l'une quelconque des revendications précédentes, dans laquelle la pile de traitement comprend au moins l'une d'une couche résistante à la chaleur comprenant du zinc ou du nickel, d'une couche anti-corrosion comprenant du chrome et d'une couche favorisant l'adhérence comprenant un composé silane.

6. Feuille de cuivre traitée telle que revendiquée dans l'une quelconque des revendications précédentes, dans laquelle la feuille de cuivre traitée a un grammage allant de 50 à 190 g/m$^2$, et/ou

   dans laquelle la feuille de cuivre traitée a une résistance à la traction comprise entre 30 et 100 kgf/mm$^2$ à 20°C, et/ou
   dans laquelle la feuille de cuivre traitée a un allongement compris entre 3 et 30 %.

7. Utilisation d'une feuille de cuivre traitée telle que revendiquée dans l'une quelconque des revendications précédentes comme collecteur de courant pour une batterie secondaire.

8. Ensemble d'électrode comprenant un collecteur de courant comprenant une feuille de cuivre traitée telle que revendiquée dans l'une quelconque des revendications 1 à 6 supportant une électrode comprenant une couche de silicium, dans lequel la quantité de silicium dans la couche de silicium est supérieure à 50 %, de préférence d'au moins 90 %, plus préférablement au-dessus de 95 % ou 99 %.

9. Ensemble d'électrode tel que revendiqué dans la revendication précédente, dans lequel la couche de silicium est formée par dépôt chimique en phase vapeur, de préférence par dépôt chimique en phase vapeur assisté par plasma basse pression, de silicium, et de préférence dans laquelle la couche de silicium a une épaisseur comprise entre 5 et 30 $\mu$m.

10. Ensemble d'électrode tel que revendiqué dans l'une quelconque des revendications 8 à 9, dans lequel une couche de silicium est formée sur chaque côté de la feuille de cuivre traitée.

11. Batterie secondaire comprenant un électrolyte, un ensemble cathodique, un ensemble anodique, une couche séparatrice et un composé de sel de lithium, dans laquelle l'ensemble anodique comprend une feuille de cuivre traitée telle que revendiquée dans l'une quelconque des revendications 1 à 6 ou dans laquelle l'ensemble anodique est un ensemble d'électrode tel que revendiqué dans l'une quelconque des revendications 8 à 10.

12. Procédé de production d'une feuille de cuivre traitée telle que revendiquée dans l'une quelconque des revendications 1 à 6, comprenant les étapes de :

   a) fourniture d'une feuille de cuivre (2) non traitée avec une première surface (2a) et une deuxième surface (2b) opposée à la première surface, de préférence une feuille de cuivre électrolytique ayant une rugosité de surface Rz comprise entre 1,0 et 2,5 $\mu$m sur les deux surfaces ;
   b) réalisation d'un traitement de structuration (3) sur chaque côté de la feuille de cuivre en immergeant la feuille de cuivre dans un bain d'électroplacage pour fournir une rugosité de surface prédéterminée des deux côtés,
   c) électroplacage d'une couche (7) de cuivre continue supplémentaire au-dessus des couches comprenant les nodules ; et
   d) formation d'au moins une couche (5) fonctionnelle sur les couches de cuivre continues supplémentaires.

13. Procédé de la revendication 12, dans lequel l'étape b) comprend le passage de la feuille de cuivre dans un bain d'électroplacage comprenant 5 à 25 g/L de cuivre, de préférence sous forme d'ions cuivre Cu$^{2+}$, et 30 à 90 g/L de préférence entre 40 et 80g/L d'acide sulfurique, et dans lequel une densité de courant de 15 à 30 A/dm$^2$, de préférence de 20 à 30 A/dm$^2$, est appliquée, dans lequel la durée d'immersion est comprise entre 5 et 10 s, et/ou dans lequel le bain est maintenu à une température comprise entre 20 et 30°C.

14. Procédé de la 13, dans lequel les étapes b) et c) sont répétées sur chaque surface pour produire des nodules de cuivre de forme ellipsoïdale et ayant une hauteur comprise entre 1,2 et 3,0 $\mu$m, de préférence entre 1,8 et 2,4 $\mu$m, et un diamètre compris entre 0,6 et 1,1 $\mu$m, de préférence entre 0,7 et 0,9 $\mu$m.

15. Procédé de l'une des revendication 12 à 14, dans lequel l'étape c) comprend le passage de la feuille de cuivre dans un bain d'électroplacage comprenant 60 à 100 g/L de cuivre, de préférence sous forme d'ions cuivre Cu$^{2+}$, et 30 à 90 g/L de préférence entre 40 et 80 g/L d'acide sulfurique, et dans lequel une densité de courant de 15 à 30 A/dm$^2$, de préférence de 15 à 25 %A/dm$^2$, est appliquée, dans lequel la durée d'immersion est comprise entre 5 et 10 s.

Figure 1

Figure 3

Figure 4

Figure 2

Figure 5

Figure 6

Figure 7

Figure 8

Figure 9

Figure 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021029769 A1

**Non-patent literature cited in the description**

- **R. WINAND**. Electrocristallisation. Théorie et applications'. *JOURNAL DE PHYSIQUE IV Colloque C1*, January 1994, vol. 4, C1-55-C1-73